# EUROPÄISCHE PATENTSCHRIFT

(11) **EP 3 542 446 B1**
(45) Veröffentlichungstag und Bekanntmachung des Hinweises auf die Patenterteilung: **17.11.2021**
(21) Anmeldenummer: 17769019.5
(22) Anmeldetag: 12.09.2017
(51) Int. Cl.: H02K 3/28, H02K 15/06

(54) **WELLENWICKLUNGSSPULE FÜR EIN STATORBLECHPAKET EINER ELEKTRISCHEN MASCHINE**
WAVE WINDING COIL FOR A STATOR LAMINATED CORE OF AN ELECTRICAL MACHINE
BOBINE À ENROULEMENT ONDULÉ POUR UN NOYAU FEUILLETÉ DE STATOR D'UNE MACHINE ÉLECTRIQUE

(30) Priorität: 18.11.2016 DE 102016222818
(43) Veröffentlichungstag der Anmeldung: 25.09.2019
(73) Patentinhaber: Volkswagen Aktiengesellschaft, 38440 Wolfsburg (DE)
(72) Erfinder: WINTER, Jan, 34121 Kassel (DE); PROKSCHA, Joachim, 34131 Kassel (DE)
(86) Internationale Anmeldenummer: PCT/EP2017/072917
(87) Internationale Veröffentlichungsnummer: WO 2018/091163

(56) Entgegenhaltungen:
- EP-A1- 2 597 754
- EP-A2- 1 381 140
- EP-A2- 1 788 691
- DE-A1-102004 042 768
- DE-A1-102008 021 779
- DE-C- 916 325
- US-A1- 2010 231 082

## Beschreibung

Die Erfindung betrifft eine Wellenwicklungsspule für ein innengenutetes oder außengenutetes Statorblechpaket einer elektrischen Maschine, umfassend mehrere wellenförmig ausgebildete elektrische Leiter, wobei jeder der mehreren elektrischen Leiter eine Vielzahl von parallel verlaufend angeordneten Drahtabschnitten aufweist, wobei die Wellenwicklungsspule derart an dem Statorblechpaket anordbar ist, dass mehrere oder alle der parallel verlaufend angeordneten Drahtabschnitte in Statornuten des Statorblechpaketes einführbar sind, wobei die Wellenwicklungsspule im nicht am Statorblechpaket angeordneten Zustand als eine ebene Spule ausgebildet ist, und wobei vorgesehen ist, dass die Wellenwicklungsspule zum Einsetzen in ein innengenutetes oder außengenutetes Statorblechpaket zu einem im Wesentlichen zylindrischen Spulenkörper gebogen wird.

Ferner betrifft die Erfindung ein Statorblechpaket mit einer Wellenwicklungsspule.

### Stand der Technik

Aus der DE 10 2008 021 779 A1 ist eine Spulenwicklung für Statoren oder Rotoren elektrischer Maschinen bekannt, wobei die Drähte der Spulenwicklung wellenförmig mit geraden Stegabschnitten und diese verbindenden, bogen- oder giebelförmigen Wickelkopfabschnitten ausgebildet sind. Die Drähte werden mit den Stegabschnitten in die Nuten der Statoren bzw. Rotoren eingeführt. Die Drähte werden vor der wellenförmigen Formgebung nur auf denjenigen Abschnitten, aus denen die Wickelköpfe geformt werden, mit einer zusätzlichen Isolierung versehen.

Die US 2010/0231082 A1 offenbart eine Wellenwicklungsspule für einen Stator einer elektrischen Maschine. Zur Herstellung der Wellenwicklungsspule werden Drahtabschnitte von elektrischen Leitern in Nuten einer Vorrichtung angeordnet, wobei die Nuten der Vorrichtung konstante Abstände zueinander aufweisen.

Die EP 2 597 754 A1 offenbart eine elektrische Maschine umfassend einen Statorkern mit einer Vielzahl von Nuten. In den Nuten sind parallele Drahtabschnitte einer Wellenwicklungsspule angeordnet.

Aus der DE 10 2004 042 768 A1 ist ein hochpoliger, linearer oder rotativer Synchron-Direktantriebsmotor bekannt, umfassend ein Primärteil mit einem Joch und einer Vielzahl von Zähnen sowie zwischen den Zähnen befindlichen Nuten und in den Nuten verlaufende Wicklungsstränge einer Mehrphasenwicklung, wobei die Nutausgänge eine gleichmäßige Nutteilung und die Permanentmagnetpole eine gleichmäßige Polteilung besitzen.

Die EP 1 381 140 A2 offenbart eine mehrphasig nacheinander verbundene Segmentspule einer rotierenden elektrischen Maschine. Die Spule besteht aus mehreren von in Reihe geschalteten Leitersegmenten. Jedes der Leitersegmente umfasst einen aus einem Statorkern hervorragenden Kopf, ein Paar Leiterbeine und ein Paar Enden, welche aus dem Statorkern herausragen.

Aus der EP 1 788 691 A2 ist ein Stator für einen Drehstrommotor bekannt, der Stator umfasst Schleifenwicklungen für zwei Phasen, eine Vielzahl von Zähnen, die in Umfangsrichtung benachbart angeordnet sind, und eine Vielzahl von Schlitzen, die zwischen der Vielzahl von Zähnen ausgebildet sind.

Eine mehrfache Parallelwicklung für ein- und mehrphasige Wechselstrom-Kommutatormaschinen ist aus der DE 916 325 C bekannt, bei welcher die Hauptwicklung gesehnten oder ungesehnten Wickelschritt besitzt und dieser eine Hilfswicklung mit Sehnung parallel geschaltet ist. Die Windungen der Hilfswicklung sind miteinander und mit den Lamellen derart verbunden, dass für jede Lamelle die ankommende und die abgehende Windung um mindestens eine Nutteilung gegeneinander verschoben sind, und zwar in solcher Weise, dass die Ecken des Spannungsvielecks der Hilfswicklung mit den Ecken des Spannungsvielecks der Hauptwicklung zusammenfallen.

Elektrische Maschinen mit einem Statorblechpaket, insbesondere elektrische Maschinen von Automobilen, unterliegen hohen Anforderungen hinsichtlich einer möglichst hohen Leistungsdichte, geringer Wickelkopfhöhen und hoher Kupferfüllfaktoren. Zur Erfüllung dieser Anforderungen eignet sich besonders gut eine elektrische Maschine mit einem Rechteckkupferdraht als elektrischem Leiter sowie einer Wellenwicklung. Zwar sind Verfahren zur Herstellung von Wellenwicklungsspulen aus dem Stand der Technik bekannt, jedoch stellt das Einbringen einer bekannten Wellenwicklungsspule in ein Statorblechpaket eine große Herausforderung dar. Die zylindrische Form des Statorblechpaketes bedingt, dass der Abstand zweier Statornuten bei einem innengenuteten Statorblechpaket von innen nach außen größer wird. Dies führt beim Einbringen der Wellenwicklungsspule dazu, dass die elektrischen Leiter bzw. Drähte im Wickelkopf bei einem konstanten Drahtabstand, das heißt bei einer konstanten Nutteilung, einer starken Stauchung und Streckung unterliegen. Die Belastung auf die Isolation der elektrischen Leiter, welche beispielsweise als Kupferlackdrähte ausgebildet sind, ist besonders hoch.

Darüber hinaus führen die Stauchungs- und Streckungskräfte im Bereich der Statornuten zu einer Deformation der elektrischen Leiter und einer Kollision beziehungsweise Berührung der elektrischen Leiter mit dem Statorblechpaket. Zudem kann ein konstanter Abstand zwischen den elektrischen Leitern, das heißt eine konstante Nutteilung, der Wellenwicklungsspule dazu führen, dass die elektrischen Leiter durch die wirkenden Stauchungs- und Streckungskräfte aus den Statornuten beziehungsweise den Statornutöffnungen herausgedrückt werden. Dies hat zur Folge, dass das Einbringen der Spule sowie nachfolgende Fertigungsprozesse nicht prozesssicher durchgeführt werden können.

Aus dem Stand der Technik sind zur Herstellung von Wellenwicklungsspulen gebogene, sogenannte "Hairpins" mit verändertem Drahtabstand bekannt. Jedoch haben Hairpinstatoren den Nachteil, dass zusätzliche nachgelagerte Prozesse benötigt werden, wie das Twisten oder das Kontaktieren aller Hairpinenden. Diese Prozesse werden bei einer Wellenwicklung nicht benötigt. Die vorstehend beschriebenen Nachteile lassen sich mit den aus dem Stand der Technik bekannten Lösungen nicht vollends verhindern.

### Darstellung der Erfindung: Aufgabe, Lösung, Vorteile

Der vorliegenden Erfindung liegt die Aufgabe zugrunde, eine Wellenwicklungsspule der vorgenannten Art bereitzustellen, mit welcher das Einbringen der Wellenwicklungsspule in ein Statorblechpaket einer elektrischen Maschine sowie nachfolgende Fertigungsprozesse prozesssicher durchgeführt werden können, und bei welcher das Stauchen und Strecken der elektrischen Leiter beim Einführen der Wellenwicklungsspule in das Statorbechpaket verringert oder vermieden werden. Ferner liegt der vorliegenden Erfindung die Aufgabe zugrunde, eine Wellenwicklungsspule bereitzustellen, bei welcher beim Einführen der Wellenwicklungsspule in ein Statorblechpaket die Belastung auf die Isolation des elektrischen Leiters, beispielsweise des Kupferlackdrahtes, besonders gering ist und bei welcher vermieden wird, dass die elektrischen Leiter aufgrund von Stauchungs- und Streckungskräfte aus den Statornuten des Statorblechpakets herausgedrückt werden.

Zudem liegt der vorliegenden Erfindung die Aufgabe zugrunde, ein Statorblechpaket mit einer Wellenwicklungsspule bereitzustellen, mit dem die vorstehend beschriebenen Vorteile erzielt werden.

Die Lösung dieser Aufgabe gelingt erfindungsgemäß durch Bereitstellung einer Wellenwicklungsspule für ein innengenutetes oder außengenutetes Statorblechpaket einer elektrischen Maschine, umfassend mehrere wellenförmig ausgebildete elektrische Leiter, wobei jeder der mehreren elektrischen Leiter eine Vielzahl von parallel verlaufend angeordneten Drahtabschnitten aufweist, wobei die Wellenwicklungsspule derart an dem Statorblechpaket anordbar ist, dass mehrere oder alle der parallel verlaufend angeordneten Drahtabschnitte in Statornuten des Statorblechpakets einführbar sind, wobei die Wellenwicklungsspule im nicht am Statorblechpaket angeordneten Zustand als eine ebene Spule ausgebildet ist, und wobei vorgesehen ist, dass die Wellenwicklungsspule zum Einsetzen in ein innengenutetes oder außengenutetes Statorblechpaket zu einem im Wesentlichen zylindrischen Spulenkörper gebogen wird, wobei die Wellenwicklungsspule ferner im nicht am Statorblechpaket angeordneten Zustand eine variable Nutaufteilung aufweist, sodass mindestens ein erster Abstand und ein zweiter Abstand von jeweils zwei in einer ersten Richtung, welche im am Statorblechpaket angeordneten Zustand der Wellenwicklungsspule einer Umfangsrichtung des Statorblechpakets entspricht, benachbart angeordneten und in benachbarte Statornuten einzuführenden Drahtabschnitten voneinander verschieden sind, wobei der erste Abstand und der zweite Abstand in der ersten Richtung gemessen werden, wobei die benachbart angeordneten Drahtabschnitte je nach Anordnung und Wickelschema der Wellenwicklungsspule Drahtabschnitte desselben elektrischen Leiters oder benachbarte Drahtabschnitte verschiedener elektrischer Leiter sind, wobei die Wellenwicklungsspule entlang der ersten Richtung mindestens zwei Abschnitte aufweist, wobei jeder der Abschnitte eine Vielzahl von parallel verlaufend angeordneten Drahtabschnitten der mehreren elektrischen Leiter aufweist, wobei jeder der Abschnitte eine konstante Nutteilung aufweist, wobei die Nutteilungen von mindestens zwei Abschnitten unterschiedlich sind, wobei jeder Abschnitt konstanter Nutteilung im am Statorblechpaket angeordneten Zustand einem Umlauf der Wellenwicklungsspule um den Innenumfang oder um den Außenumfang des Statorblechpakets entspricht, und wobei die konstante Nutteilung in jedem Abschnitt demjenigen Nutabstand entspricht, welcher in der Tiefe in der Statornut gemessen wird, in der die dem jeweiligen Umlauf entsprechenden parallel verlaufend angeordneten Drahtabschnitte zu liegen kommen.

Im Folgenden werden unter parallel verlaufend angeordneten Drahtabschnitten Drahtabschnitte verstanden, welche hinsichtlich ihrer räumlichen Ausrichtung parallel verlaufen. Insbesondere werden unter parallel verlaufend angeordneten Drahtabschnitten keine Drahtabschnitte verstanden, welche in elektrischer Hinsicht parallel geschaltet oder verschaltet sind.

Eine Wellenwicklungsspule umfasst mehrere elektrische Leiter, insbesondere einen elektrischen Leiter pro Phase, welche wellenförmig ausgebildet sind. Dies bedeutet, dass jeder elektrische Leiter gerade Drahtabschnitte aufweist, die im Wesentlichen zueinander parallel verlaufend angeordnet sind. Die parallel verlaufend angeordneten Drahtabschnitte sind durch bogenförmige Abschnitte des elektrischen Leiters miteinander verbunden, sodass der elektrische Leiter insgesamt in etwa wellenförmig ausgebildet ist. Im am Statorblechpaket angeordneten Zustand der Wellenwicklungsspule sind die parallel verlaufend angeordneten Drahtabschnitte in Statornuten angeordnet, welche im Wesentlichen in einer Axialrichtung des Statorblechpakets verlaufen. Dementsprechend sind die parallel verlaufend angeordneten Drahtabschnitte der mehreren elektrischen Leiter der Wellenwicklungsspule bevorzugt senkrecht zu einer ersten Richtung ausgerichtet, welche im am Statorblechpaket angeordneten Zustand der Wellenwicklungsspule der Umfangsrichtung des Statorblechpakets entspricht.

Unter einer Nutteilung wird im Folgenden die Menge sowie die Verteilung beziehungsweise die Abfolge der Abstände zweier parallel verlaufend angeordneter und benachbarter Drahtabschnitte des oder der elektrischen Leiter entlang der Wellenwicklungsspule verstanden. Eine Nutteilung wird dann als variable Nutteilung bezeichnet, wenn mindestens zwei dieser Abstände, das heißt ein erster Abstand und ein zweiter Abstand, unterschiedlich beziehungsweise voneinander verschieden sind. Die Abstände werden dabei zwischen zwei parallelen und benachbart verlaufenden und in benachbarte Statornuten einzuführenden Drahtabschnitten der Wellenwicklungsspule in einer ersten Richtung gemessen, welche im am Statorblechpaket angeordneten Zustand der Wellenwicklungsspule einer Umfangsrichtung des Statorblechpakets entspricht.

Bevorzugt sind diese Abstände die freien bzw. lichten Abstände zwischen den einzelnen parallel verlaufend angeordneten Drahtabschnitten und entsprechen somit im am Statorblechpaket angeordneten Zustand der Wellenwicklungsspule in etwa der Breite der Materialvorsprünge, welche benachbarte Statornuten des Statorblechpakets voneinander trennen. Darüber hinaus können die Abstände jedoch auch zwischen den Mitten oder gedachten Mittellinien der benachbarten und parallel verlaufend angeordneten Drahtabschnitten gemessen werden. Entscheidend ist, dass die Messung der Abstände zwischen den Drahtabschnitten konsistent erfolgt und keine verschiedenen Messmethoden vermischt werden. Eine variable Nutteilung liegt somit dann vor, wenn mindestens zwei der konsistent gemessenen Abstände verschieden sind.

Die Wellenwicklungsspule kann während der Herstellung in Form einer im Wesentlichen ebenen Spule hergestellt werden. Zum Einsetzen der Wellenwicklungsspule wird diese zu einem im Wesentlichen zylindrischen Spulenkörper gebogen und in ein innengenutetes Statorblechpaket eingeführt. Die einzelnen parallel verlaufend angeordneten Drahtabschnitte der Wellenwicklungsspule werden dann in die Statornuten des Statorblechpakets eingeführt. Auch eine Anordnung der Wellenwicklungsspule an der Außenseite eines außengenuteten Statorblechpakets ist denkbar.

Vorteilhaft an der variablen Nutteilung der erfindungsgemäßen Wellenwicklungsspule ist, dass der jeweilige Abstand zweier benachbarter und parallel verlaufend angeordneter Drahtabschnitte davon abhängt, wo diese nach dem Einbringprozess der Wellenwicklungsspule in das Statorblechpaket zum Liegen kommen. Liegen die Drahtabschnitte im Nutgrund von Statornuten eines innengenuteten Statorblechpakets, so ist der Abstand jeweils zweier benachbarter parallel verlaufend angeordneter Drahtabschnitte am größten. Liegen die Drahtabschnitte im Bereich der Nutöffnung der Statornuten des Statorblechpakets, so ist der Abstand jeweils zweier benachbarter parallel verlaufend angeordneter Drahtabschnitte am geringsten. In der ersten Richtung der Wellenwicklungsspule betrachtet, welche im am Statorblechpaket angeordneten Zustand der Wellenwicklungsspule einer Umfangsrichtung des Statorblechpakets entspricht, sind somit die Abstände von jeweils zwei parallel verlaufend und benachbart angeordneter Drahtabschnitte derart unterschiedlich ausgebildet, dass die Abstände jener Drahtabschnitte, welche am Statorblechpaket im Nutgrund zu liegen kommen, am größten sind, wohingegen die Abstände der Drahtabschnitte, welche im am Statorblechpaket angeordneten Zustand an der Nutöffnung zu liegen kommen, am geringsten sind. Benachbarte elektrische Leiter der Wellenwicklungsspule haben somit nicht immer den gleichen Abstand. Daher sind gegebenenfalls die Wickelköpfe der einzelnen Bereiche mit unterschiedlichen Abständen auch minimal unterschiedlich.

Hierdurch ergibt sich der Vorteil, dass die elektrischen Leiter beim Anordnen der Wellenwicklungsspule an dem Statorblechpaket geringerer oder keiner Stauchung und Streckung unterliegen, sodass insbesondere auch die Belastung auf eine Kupferlackisolierung der elektrischen Leiter minimiert oder vermieden wird. Auch wird verhindert, dass aufgrund einer Deformation der elektrischen Leiter eine Kollision dieser Leiter mit dem Statorblechpaket stattfindet und dass diese elektrischen Leiter aus den Nutöffnungen herausgedrückt werden. Von besonderem Vorteil ist, dass das Einbringen der Spule sowie nachfolgende Fertigungsprozesse prozesssicher durchführbar sind. Zudem findet vorteilhafter Weise keine nachträgliche Verformung des Wickelkopfes und damit einhergehende Beeinflussungen nachfolgender Fertigungsprozesse statt.

Die Wellenwicklungsspule ist insbesondere für elektrische Hilfs- und/oder Traktionsantriebe von Hybrid- und E-Fahrzeugen mit einer Wellenwicklung geeignet.

Erfindungsgemäß ist die Wellenwicklungsspule für ein Statorblechpaket mit einer Innennutung oder mit einer Außennutung geeignet sein.

Dies bedeutet, dass die Wellenwicklungsspule im Falle eines innengenuteten Statorblechpaketes in einen Innenbereich des Statorblechpaketes eingeführt wird und dass mehrere oder alle parallel verlaufend angeordneten Drahtabschnitte in die radial nach außen verlaufenden Statornuten des Statorblechpaketes eingeführt werden.

Bei einem außengenuteten Statorblechpaket wird hingegen die Wellenwicklungsspule gewissermaßen außen um das Statorblechpaket herumgelegt und die parallel verlaufend angeordneten Drahtabschnitte werden in die radial nach innen verlaufenden Statornuten eingeführt.

Bevorzugt kann vorgesehen sein, dass die Wellenwicklungsspule mindestens sechs, bevorzugt mindestens zwölf, insbesondere bevorzugt mindestens 20, wellenförmig ausgebildete elektrische Leiter umfasst, wobei jeder der mehreren elektrischen Leiter eine Vielzahl von parallel verlaufend angeordneten Drahtabschnitten aufweist.

Die parallel verlaufend angeordneten Drahtabschnitte sind dabei hinsichtlich ihrer räumlichen Ausrichtung parallel verlaufend angeordnet.

Durch das Vorsehen mehrerer wellenförmig ausgebildeter elektrischer Leiter lässt sich insbesondere eine hohe Leistungsdichte und ein hoher Kupferfüllfaktor erhalten.

Die Nutteilung wird bei mehreren wellenförmig ausgebildeten elektrischen Leitern für die Gesamtheit der Vielzahl von parallel verlaufend angeordneten Drahtabschnitten aller Leiter bestimmt, sodass die zu messenden Abstände jeweils zweier benachbart angeordneter Drahtabschnitte je nach Anordnung und Wickelschema der Wellenwicklungsspule Drahtabschnitte desselben elektrischen Leiters oder benachbarte Drahtabschnitte verschiedener elektrischer Leiter sind. Im Stand der Technik sind Wellenwicklungsspulen mit mehreren wellenförmig ausgebildeten elektrischen Leitern bekannt.

Weiter bevorzugt kann vorgesehen sein, dass die Nutteilung in der ersten Richtung abnimmt und/oder zunimmt.

Unter einer abnehmenden Nutteilung wird eine variable Nutteilung verstanden, in der, ausgehend von einem ersten Ende der Wellenwicklungsspule, die Abstände benachbart angeordneter Drahtabschnitte in Richtung des anderen zweiten Endes der Wellenwicklungsspule abnehmen. Prinzipiell, jedoch nicht von der Erfindung vorgesehen, kann diese Abnahme der Abstände kontinuierlich sein, das heißt, dass benachbarte Abstände stets unterschiedlich sind, wobei jeweils der dem ersten Ende näherliegende Abstand größer ist als der in Richtung des zweiten Endes direkt darauffolgende Abstand. Dies bedeutet, dass der Abstand zwischen einem ersten und einem benachbarten zweiten Drahtabschnitt größer ist als der Abstand zwischen dem zweiten Drahtabschnitt und einem wiederum dem zweiten Drahtabschnitt benachbarten dritten Drahtabschnitt, und so fort.

Jedoch ist vorgesehen, dass die Nutteilung in Sprüngen ab- oder zunimmt, das heißt, dass, ausgehend von dem ersten Ende der Wellenwicklungsspule die benachbarten Abstände zunächst konstant bzw. einander gleich sind. Nach einer gewissen Anzahl von Abständen bzw. Drahtabschnitten folgt ein Sprung in der Größe der Abstände, sodass eine weitere Anzahl der darauffolgenden Abstände beispielsweise kleiner und wiederum konstant bzw. einander gleich sind. Nach der weiteren Anzahl von Abständen bzw. Drahtabschnitten kann ein erneuter Sprung in der Größe der Abstände folgen und so fort.

Erfindungsgemäß ist vorgesehen, dass die Wellenwicklungsspule entlang der ersten Richtung mehrere Abschnitte aufweist, wobei jeder der Abschnitte eine konstante Nutteilung aufweist, wobei die Nutteilungen von mindestens zwei Abschnitten unterschiedlich sind.

Die Wellenwicklungsspule kann als eine Ansammlung mehrerer Abschnitte angesehen werden, wobei die Abschnitte in der ersten Richtung, welche im am Statorblechpaket angeordneten Zustand der Wellenwicklungsspule einer Umfangsrichtung des Statorblechpakets entspricht, nebeneinander angeordnet sind. Jeder der Abschnitte weist eine Vielzahl von parallel verlaufend angeordneten Drahtabschnitten der mehreren elektrischen Leiter auf. Für jeden der Abschnitte kann die Nutteilung durch Vermessen der Abstände jeweils zweier benachbart liegender Drahtabschnitte bestimmt werden. Dabei weisen mindestens zwei Abschnitte eine unterschiedliche Nutteilung auf, das heißt, dass ein erster Abschnitt der mindestens zwei Abschnitte einen Abstand zwischen zwei benachbart verlaufenen Drahtabschnitten aufweist, welcher keinem Abstand zweier benachbart verlaufender Drahtabschnitte des zweien Abschnittes entspricht bzw. gleicht, und/oder dass sich die Verteilung bzw. die Abfolge der Abstände jeweils zweier benachbart liegender Drahtabschnitte im ersten Abschnitt von der Verteilung der Abstände im zweiten Abschnitt unterscheidet. In letzterem Fall bedeutet dies, dass die Abfolge der Abstände benachbart liegender Drahtabschnitte in der ersten Richtung gesehen und beispielsweise ausgehend von dem ersten Ende der Wellenwicklungsspule in den beiden Abschnitten unterschiedlich ist.

Jeder Abschnitt weist eine konstante Nutteilung auf, sodass die Abstände jeweils zwei parallel und benachbart verlaufender Drahtabschnitte über den gesamten Abschnitt konstant sind. Durch die Ausbildung von Abschnitten mit einer konstanten Nutteilung ist eine Wellenwicklungsspule besonders einfach herstellbar. Zudem kann die Stauchung und Streckung der Wellenwicklungsspule beim Einsetzen in ein Statorblechpaket besonders effizient verhindert werden.

Weiter bevorzugt kann vorgesehen sein, dass die Abschnitte mit konstanter Nutteilung gleichmäßig entlang der ersten Richtung angeordnet sind, wobei bevorzugt mehrere, gegebenenfalls alle, Abschnitte mit konstanter Nutteilung eine Anzahl von parallel verlaufend angeordneten Drahtabschnitten aufweisen, welche der Anzahl der Statornuten des Statorblechpakets entspricht, wobei besonders bevorzugt ein Abschnitt konstanter Nutteilung eine Anzahl von Drahtabschnitten aufweist, welche größer als die Anzahl der Statornuten ist.

Vorteilhafterweise verteilen sich die Abschnitte konstanter Nutteilung gleichmäßig auf der Wellenwicklungsspule. Ein Bereich ist dabei bevorzugt immer genauso lang, wie das Statorblechpaket Statornuten aufweist. Hierdurch kann sichergestellt werden, dass bei einer Wellenwicklungsspule, welche im Inneren und/oder am Äußeren des Statorblechpakets mehrfach den Innenumfang beziehungsweise den Außenumfang des Statorblechpakets derart umläuft, dass in jeder Statornut des Statorblechpakets mehrere parallel verlaufende Drahtabschnitte der Wellenwicklungsspule übereinander zu liegen kommen, für jeden Umlauf der Wellenwicklungsspule um den Innen- bzw. Außenumfang des Statorblechpakets die Nutteilung konstant ist und insbesondere demjenigen Nutabstand entspricht, welcher in der Tiefe in der Nut gemessen wird, in der die dem jeweiligen Umlauf entsprechenden parallel verlaufend angeordneten Drahtabschnitte zu liegen kommen.

Erfindungsgemäß entspricht jeder Abschnitt konstanter Nutteilung einem Umlauf der Wellenwicklungsspule um den Innenumfang oder um den Außenumfang des Statorblechpakets, wobei jeder Abschnitt eine andere Nutteilung aufweist.

Ein Abschnitt ist daher bevorzugt immer genauso lang, wie das Statorblechpaket Statornuten aufweist. Jedoch können Abweichungen durch Anfangs- und Enddrähte auftreten. So ist besonders bevorzugt einer, insbesondere der in der ersten Richtung gesehene letzte Abschnitt der Wellenwicklungsspule, länger ausgebildet, das heißt, dieser Abschnitt weist mehr parallel verlaufende Drahtabschnitte auf, als das Statorblechpaket Statornuten aufweist. Diese zusätzlichen parallel verlaufend angeordneten Drahtabschnitte befinden sich somit am Spulenanfang oder am Spulenende. Spulenanfang und Spulenende überlappen sich im Statorblechpaket, sodass ein Abschnitt, entweder der Abschnitt am Spulenanfang oder der Abschnitt am Spulenende um eine gewisse Anzahl, bevorzugt sechs, Drahtabschnitte länger sein kann.

Aufgrund der unterschiedlichen Nutteilung in den einzelnen nebeneinander angeordneten Abschnitten, weisen die Abschnitte bei gleicher Anzahl parallel verlaufender Drahtabschnitte unterschiedliche Längen auf. Beispielsweise kann eine Wellenwicklungsspule sechs Abschnitte umfassen. Ein Abschnitt entspricht dem Spulenanfang und/oder dem Spulenende und weist beispielsweise sechs parallel verlaufende Drahtabschnitte mehr auf als die anderen Abschnitte. Ein erster Abschnitt, dessen parallel verlaufend angeordneten Drahtabschnitte im am Statorblechpaket angeordneten Zustand der Wellenwicklungsspule im Nutgrund zu liegen kommen, hat eine konstante Nutteilung mit einem Abstand je zweier benachbarter Drahtabschnitte von 6,5 mm. Der erste Abschnitt kann dann beispielsweise eine Länge von 819 mm aufweisen. Der zweite Abschnitt hat eine Nutteilung mit konstanten Abständen zwischen benachbarten Drahtabschnitten von 6,4 mm und eine Länge von 768 mm. Der dritte Abschnitt hat eine Nutteilung mit konstanten Abständen zwischen benachbarten Drahtabschnitten von 6,3 mm und eine Länge von 756 mm. Der vierte Abschnitt hat eine Nutteilung mit konstanten Abständen zwischen benachbarten Drahtabschnitten von 6,2 mm und eine Länge von 744 mm. Der fünfte Abschnitt hat eine Nutteilung mit konstanten Abständen zwischen benachbarten Drahtabschnitten von 6,1 mm und eine Länge von 732 mm. Der sechste Abschnitt hat eine Nutteilung mit konstanten Abständen zwischen benachbarten Drahtabschnitten von 6,0 mm und eine Länge von 720 mm. Insgesamt ergibt sich eine Gesamtlänge der Wellenwicklungsspule von 4539 mm. In der nachfolgenden Tabelle 1 sind diese Werte noch einmal tabellarisch aufgeführt.

**Tabelle 1**

| Abschnitt | Nutteilung in mm | Anzahl paralleler Drahtabschnitte | Länge des Abschnitts in mm |
|---|---|---|---|
| 1 | 6,5 | 126 | 819 |
| 2 | 6,4 | 120 | 768 |
| 3 | 6,3 | 120 | 756 |
| 4 | 6,2 | 120 | 744 |
| 5 | 6,1 | 120 | 732 |
| 6 | 6,0 | 120 | 720 |

Ferner ist bevorzugt vorgesehen, dass die Wellenwicklungsspule mindestens zwei Lagen aufweist, wobei in einer zweiten Richtung, welche im am Statorblechpaket angeordneten Zustand der Wellenwicklungsspule einer Radialrichtung des Statorblechpakets entspricht, mindestens zwei Drahtabschnitte übereinander angeordnet sind, wobei die mindestens zwei Drahtabschnitte besonders bevorzugt Drahtabschnitte unterschiedlicher elektrischer Leiter sind.

Besonders bevorzugt kann vorgesehen sein, dass die Zahl der Abschnitte mit konstanter Nutteilung der Anzahl oder der Hälfte der Anzahl der in jeder Statornut anzuordnenden Drahtabschnitte entspricht.

Bei einer einlagigen Wellenwicklungsspule, bei der die parallel verlaufend angeordneten Drahtabschnitte in der ersten Richtung gesehen, welche im am Statorblechpaket angeordneten Zustand der Wellenwicklungsspule der Umfangsrichtung des Statorblechpakets entspricht, ausschließlich nebeneinander angeordnet sind, entspricht die Zahl der Abschnitte mit konstanter Nutteilung bevorzugt der Anzahl der in jeder Statornut anzuordnenden Drahtabschnitte. Eine derartige einlagige Wellenwicklungsspule weist insbesondere keine parallel verlaufend angeordneten Drahtabschnitte auf, welche in einer zweiten Richtung, welche im am Statorblechpaket angeordneten Zustand der Wellenwicklungsspule einer Radialrichtung des Statorblechpakets entspricht, übereinander angeordnet sind. Eine zweilagige Wellenwicklungsspule weist hingegen in der zweiten Richtung zwei übereinander angeordnete parallele Drahtabschnitte auf.

Bevorzugt ist hingegen jedoch vorgesehen, dass die Zahl der Abschnitte mit konstanter Nutteilung der Hälfte der Anzahl der in jeder Statornut anzuordnenden Drahtabschnitte entspricht. Die so bestimmte Anzahl von Abschnitten ist insbesondere bei einer zweilagig ausgebildeten Wellenwicklungsspule vorteilhaft.

Beispielsweise sind bei zwölf Drahtabschnitten pro Nut, insbesondere bei einer zweilagig ausgebildeten Wellenwicklungsspule, sechs Abschnitte mit verschiedenen, jedoch bevorzugt über die jeweiligen Abschnitte konstanten, Nutteilungen vorzusehen.

Bei einer Wellenwicklungsspule, welche zwölf elektrische Leiter aufweist, können die Leiter in der ersten Richtung von 1 bis 12 durchnummeriert werden. Aufgrund der Wellenwickelungstechnik für eine zweilagige Wellenwicklungsspule kommen dabei, in der zweiten Richtung gesehen, stets parallel verlaufend angeordnete Drahtabschnitte der elektrischen Leiter 1 und 7, 2 und 8, 3 und 9, 4 und 10, 5 und 11 sowie 6 und 12, übereinander zu liegen. In der zweiten Richtung gesehen wechselt dabei die Reihenfolge der Drahtabschnittspaare von in der ersten Richtung gesehenen aufeinanderfolgenden Überlagerungen dieser Paare. Das heißt, dass bei einer ersten Überlagerung in der zweiten Richtung gesehen, Drahtabschnitt 1 über Drahtabschnitt 12 liegt, während bei der nächsten Überlagerung Drahtabschnitt 12 auf Drahtabschnitt 1 zu liegen kommt. Analog gilt dieses wechselseitige Übereinanderliegen für die Drahtkombinationen 2 und 8, 3 und 9, 4 und 10, 5 und 11, 6 und 12. Vorteilhaft an einer derartigen zweilagigen Wellenwicklungsspule ist die besonders hohe erzielbare Leistungsdichte und der hohe Kupferfüllfaktor.

Im am Statorblechpaket angeordneten Zustand einer solchen Wellenwicklungsspule kommen somit pro Umlauf um den Innen- oder den Außenumfang des Statorblechpakets jeweils zwei der übereinander liegenden Drahtabschnitte in einer Statornut zu liegen. Daher ist bevorzugt vorgesehen, dass die Anzahl der Abschnitte mit konstanter Nutteilung der Hälfte der Anzahl der in jeder Statornut anzuordnenden Drahtabschnitte entspricht.

Ferner kann bevorzugt vorgesehen sein, dass die elektrischen Leiter Kupferdrähte sind und/oder einen rechteckigen Leiterquerschnitt aufweisen. Elektrische Leiter aus Kupferdraht und/oder mit einem rechteckigen Leitungsquerschnitt erzielen eine hohe Leistungsdichte und einen hohen Kupferfüllfaktor.

Insbesondere durch die Rechteckform des Leiterquerschnitts lassen sich die parallelen Drahtabschnitte besonders einfach in ebenfalls bevorzugt rechteckförmige Statornuten einsetzen.

Weiter kann bevorzugt vorgesehen sein, dass die Wellenwicklungsspule mindestens eine, bevorzugt zwei, weiter bevorzugt mehrere Teilspulen aufweist, wobei besonders bevorzugt jede der Teilspulen einem Abschnitt oder mehreren Abschnitten mit konstanter Nutteilung entspricht.

Mit anderen Worten können die Abschnitte konstanter Nutteilung separat und einzeln hergestellt werden und werden dann anschließend zu einer vollständigen Wellenwicklungsspule zusammengesetzt werden, welche mehrere Abschnitte mit konstanter Nutteilung aufweist.

Durch die separate Herstellung einzelner Teilspulen mit konstanter Nutteilung kann der Herstellungsprozess der Wellenwicklungsspule vereinfacht werden.

Eine weitere Lösung der der Erfindung zugrundeliegenden Aufgabe liegt in der Bereitstellung eines Statorblechpakets mit vorbeschriebener Wellenwicklungsspule.

### Kurze Beschreibung der Zeichnungen

Ausführungsbeispiele der Erfindung werden nachstehend anhand der Zeichnungen näher erläutert. Es zeigen
- Fig. 1: eine Aufsicht einer Wellenwicklungsspule, angeordnet auf einer Vorrichtung zur Lagerung einer Wellenwicklungsspule,
- Fig. 2: eine schematische Aufsicht auf eine Wellenwicklungsspule umfassend sechs Abschnitte konstanter Nutteilung,
- Fig. 3: zwei Teilspulen, welche jeweils drei Abschnitte konstanter Nutteilung aufweisen.

### Ausführliche Beschreibung der Zeichnungen:

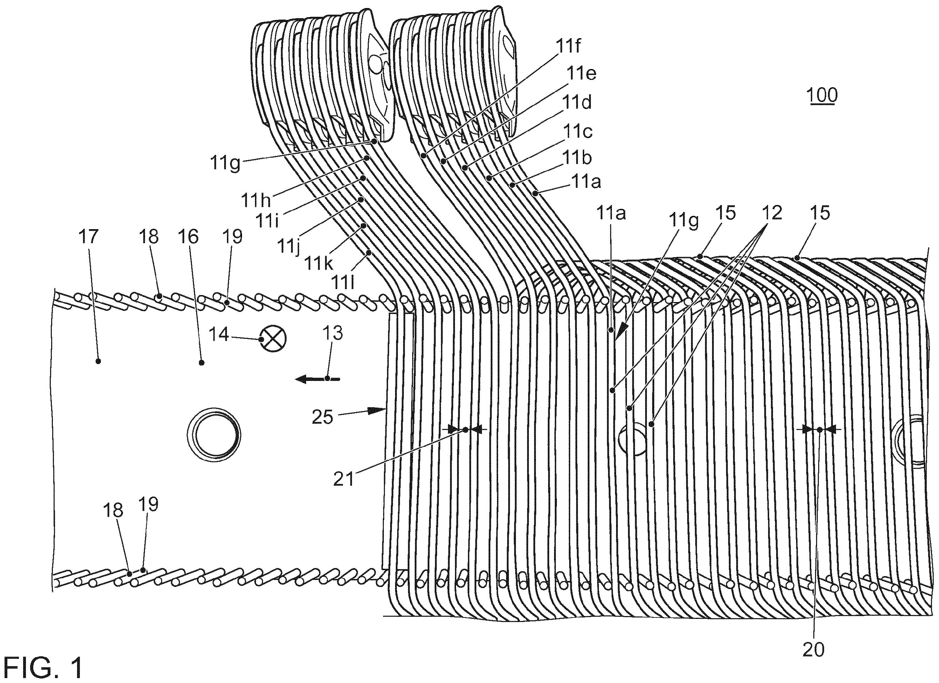

Fig. 1 zeigt eine Wellenwicklungsspule 100 umfassend zwölf wellenförmig ausgebildete elektrische Leiter 11a-11l. Die elektrischen Leiter 11a-11l weisen eine Vielzahl parallel verlaufend angeordneter Drahtabschnitte 12 auf, welche in einer ersten Richtung 13, welche im an einem Statorblechpaket angeordneten Zustand der Wellenwicklungsspule 100 einer Umfangsrichtung des Statorblechpakets entspricht, nebeneinander angeordnet sind. Auf der rechten Seite der Wellenwicklungsspule 100 in Fig. 1 sind jeweils zwei parallel verlaufend angeordnete Drahtabschnitte 12 unterschiedlicher elektrischer Leiter 11a-11l in einer in die Figurenebene weisenden zweiten Richtung 14 gesehen übereinander angeordnet. Die zweite Richtung 14 ist durch das übliche Zeichen eines X in einem Kreis dargestellt. In der Fig. 1 ist zu erkennen, dass parallel verlaufende Drahtabschnitte 12 des elektrischen Leiters 11a auf den parallel verlaufenden Drahtabschnitten 12 des Leiters 11g liegen. Ferner liegen parallel verlaufend angeordnete Drahtabschnitte der elektrischen Leiter 11b und 11h, 11c und 11i, 11d und 11j, 11e und 11k, 11f und 11l übereinander. In der ersten Richtung 13 gesehen wechseln sich die jeweils oben liegenden Drahtabschnitte 12 der übereinanderliegenden Leiter 11a-11l ab. Je nach Position entlang der ersten Richtung 13 liegt beispielsweise entweder ein Drahtabschnitt 12 des Leiters 11a auf einem Drahtabschnitt 12 des elektrischen Leiters 11g oder umgekehrt. Die elektrischen Leiter 11a bis 11l weisen bogenförmige Abschnitte 15 auf, welche die parallel verlaufend angeordneten Drahtabschnitte 12 des betreffenden elektrischen Leiters 11a-11l miteinander verbinden. Die Wellenwickelspule 100 in Fig. 1 ist auf einer Vorrichtung 16 zur Lagerung der Wellenwickelspule 100 angeordnet. Die Vorrichtung 16 weist einen Grundkörper 17 auf, welcher im Wesentlichen eine in der ersten Richtung 13 gesehen längliche Erstreckung aufweist. Randseitig an dem Grundkörper 16 sind Positionierungsmittel 18 angeordnet, welche in Form von senkrecht von dem Grundkörper 16 abstehenden, aus der Zeichenebene herausragenden Stiften 19 ausgebildet sind.

In der ersten Richtung 13 gesehen ist ein erster Abstand 20 zwischen zwei parallel verlaufend angeordneten Drahtabschnitten 12 der Wellenwicklungsspule 100 kleiner als ein zweiter Abstand 21 zwischen zwei weiteren parallel verlaufend angeordneten Drahtabschnitten, welche in der ersten Richtung näher an einem Spulenende 25 angeordnet sind.

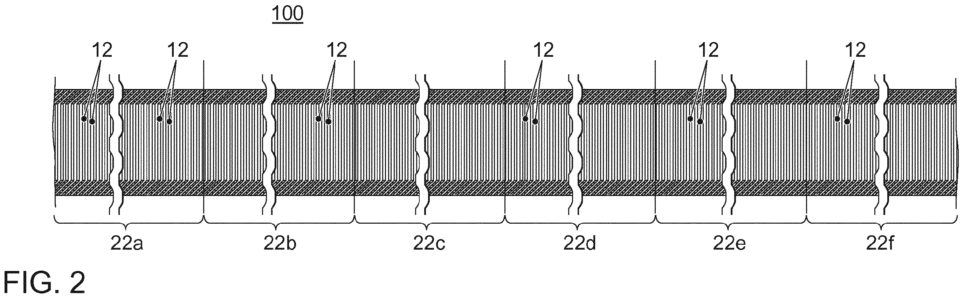

Fig. 2 zeigt eine Wellenwicklungsspule 100 mit variabler Nutteilung. Die Wellenwicklungsspule 100 weist sechs Abschnitte 22a-22f mit jeweils konstanten Nutteilungen auf. In einem ersten Abschnitt 22a konstanter Nutteilung beträgt der Abstand zweier benachbart angeordneter parallel verlaufender Drahtabschnitte 12 6,5 mm. In einem zweiten Abschnitt 22b beträgt der Abstand der benachbart und parallel verlaufend angeordneten Drahtabschnitte 12 6,4 mm. In einem dritten Abschnitt 22c beträgt der Abstand der benachbart und parallel verlaufend angeordneten Drahtabschnitte 12 6,3 mm, in einem vierten Abschnitt 22d beträgt der Abstand der benachbart und parallel verlaufend angeordneten Drahtabschnitte 12 6,2 mm. In einem fünften Abschnitt 22e beträgt der Abstand der benachbart und parallel verlaufend angeordneten Drahtabschnitte 12 6,1 mm. In einem sechsten Abschnitt 22f beträgt der Abstand der benachbart und parallel verlaufend angeordneten Drahtabschnitte 12 6,0 mm.

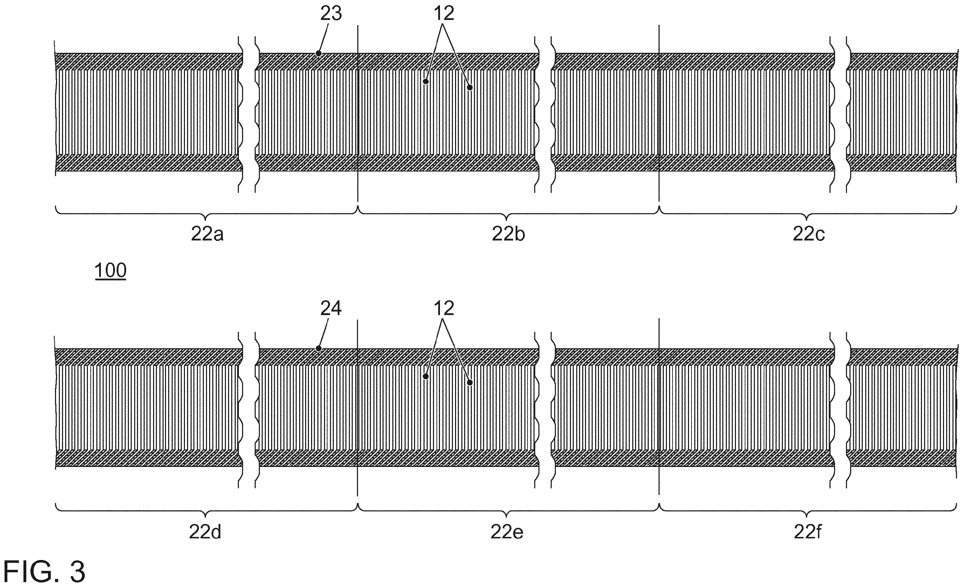

Die Wellenwicklungsspule 100 der Fig. 3 unterscheidet sich von der Wellenwicklungsspule 100 der Fig. 2 ausschließlich darin, dass die Wellenwicklungsspule aus zwei Teilspulen 23, 24 zusammengesetzt ist, wobei die erste Teilspule 23 den ersten bis dritten Abschnitt 22a-22c konstanter Nutteilung umfasst, wohingegen die zweite Teilspule 24 den vierten bis sechsten Abschnitt 22d-22f konstanter Nutteilung umfasst. Zur Herstellung einer Wellenwicklungsspule 100 mit sechs Abschnitten 22a-22f konstanter Nutteilung werden die Teilspulen 23, 24 zusammengesetzt und form-, kraft-, oder stoffschlüssig miteinander verbunden.

Zurückkehrend zu Fig. 1 ist in dieser dargestellt, dass am Spulenende 25 der Wellenwicklungsspule 100 sechs zusätzliche parallel verlaufend angeordnete Drahtabschnitte 12 der elektrischen Leiter 11g bis 11l vorgesehen sind.

## Patentansprüche

1. Wellenwicklungsspule (100) für ein innengenutetes oder außengenutetes Statorblechpaket einer elektrischen Maschine, umfassend mehrere wellenförmig ausgebildete elektrische Leiter (11a-111), wobei jeder der mehreren elektrischen Leiter (11a-11l) eine Vielzahl von parallel verlaufend angeordneten Drahtabschnitten (12) aufweist, wobei die Wellenwicklungsspule derart an dem Statorblechpaket anordbar ist, dass mehrere oder alle der parallel verlaufend angeordneten Drahtabschnitte (12) in Statornuten des Statorblechpakets einführbar sind, wobei die Wellenwicklungsspule im nicht am Statorblechpaket angeordneten Zustand als eine ebene Spule ausgebildet ist, und wobei vorgesehen ist, dass die Wellenwicklungsspule zum Einsetzen in ein innengenutetes oder außengenutetes Statorblechpaket zu einem im Wesentlichen zylindrischen Spulenkörper gebogen wird,
**dadurch gekennzeichnet, dass**
die Wellenwicklungsspule im nicht am Statorblechpaket angeordneten Zustand eine variable Nutteilung aufweist, sodass mindestens ein erster Abstand (20) und ein zweiter Abstand (21) von jeweils zwei in einer ersten Richtung (13), welche im am Statorblechpaket angeordneten Zustand der Wellenwicklungsspule einer Umfangsrichtung des Statorblechpakets entspricht, benachbart angeordneten und in benachbarte Statornuten einzuführenden Drahtabschnitten (12) voneinander verschieden sind,
wobei der erste Abstand (20) und der zweite Abstand (21) in der ersten Richtung (13) gemessen werden,
wobei die benachbart angeordneten Drahtabschnitte (12) je nach Anordnung und Wickelschema der Wellenwicklungsspule Drahtabschnitte (12) desselben elektrischen Leiters (11a-111) oder benachbarte Drahtabschnitte (12) verschiedener elektrischer Leiter (11a-111) sind,
wobei die Wellenwicklungsspule entlang der ersten Richtung mindestens zwei Abschnitte (22a-22f) aufweist, wobei jeder der Abschnitte (22a-22f) eine Vielzahl von parallel verlaufend angeordneten Drahtabschnitten der mehreren elektrischen Leiter aufweist, wobei jeder der Abschnitte (22a-22f) eine konstante Nutteilung aufweist, wobei die Nutteilungen von mindestens zwei Abschnitten (22a-22f) unterschiedlich sind, wobei jeder Abschnitt (22a-22f) konstanter Nutteilung im am Statorblechpaket angeordneten Zustand einem Umlauf der Wellenwicklungsspule um den Innenumfang oder um den Außenumfang des Statorblechpakets entspricht, und wobei die konstante Nutteilung in jedem Abschnitt (22a-22f) demjenigen Nutabstand entspricht, welcher in der Tiefe in der Statornut gemessen wird, in der die dem jeweiligen Umlauf entsprechenden parallel verlaufend angeordneten Drahtabschnitte (12) zu liegen kommen.

2. Wellenwicklungsspule (100) nach Anspruch 1, **dadurch gekennzeichnet, dass** die Wellenwicklungsspule mindestens sechs, bevorzugt mindestens zwölf, insbesondere bevorzugt mindestens 20, wellenförmig ausgebildete elektrische Leiter (11a-11l) umfasst.

3. Wellenwicklungsspule (100) nach Anspruch 1 oder 2, **dadurch gekennzeichnet, dass** die Nutteilung in der ersten Richtung abnimmt und/oder zunimmt.

4. Wellenwicklungsspule (100) nach einem der vorhergehenden Ansprüche, **dadurch gekennzeichnet, dass** die Wellenwicklungsspule entlang der ersten Richtung mehrere Abschnitte (22a-22f) aufweist.

5. Wellenwicklungsspule (100) nach einem der vorhergehenden Ansprüche, **dadurch gekennzeichnet, dass** die Abschnitte (22a-22f) mit konstanter Nutteilung gleichmäßig entlang der ersten Richtung (13) angeordnet sind, wobei bevorzugt mehrere, gegebenenfalls alle, Abschnitte (22a-22f) mit konstanter Nutteilung eine Anzahl von parallel verlaufend angeordneten Drahtabschnitten (12) aufweisen, welche der Anzahl der Statornuten des Statorblechpakets entspricht, wobei besonders bevorzugt ein Abschnitt (22a-22f) konstanter Nutteilung eine Anzahl von Drahtabschnitten (12) aufweist, welche größer als die Anzahl der Statornuten ist.

6. Wellenwicklungsspule (100) nach einem der vorhergehenden Ansprüche, **dadurch gekennzeichnet, dass** die Wellenwicklungsspule mindestens zwei Lagen aufweist, wobei in einer zweiten Richtung (14), welche im am Statorblechpaket angeordneten Zustand der Wellenwicklungsspule einer Radialrichtung des Statorblechpakets entspricht, mindestens zwei Drahtabschnitte (12) übereinander angeordnet sind, wobei die mindestens zwei Drahtabschnitte (12) besonders bevorzugt Drahtabschnitte (12) unterschiedlicher elektrischer Leiter (11a-11l) sind.

7. Wellenwicklungsspule (100) nach einem der vorhergehenden Ansprüche, **dadurch gekennzeichnet, dass** die Zahl der Abschnitte (22a-22f) mit konstanter Nutteilung der Anzahl oder der Hälfte der Anzahl der in jeder Statornut anzuordnenden Drahtabschnitte (12) entspricht.

8. Wellenwicklungsspule (100) nach einem der vorhergehenden Ansprüche, **dadurch gekennzeichnet, dass** der mindestens eine elektrische Leiter (11a-11l) ein Kupferdraht ist und/oder einen rechteckigen Leiterquerschnitt aufweist.

9. Wellenwicklungsspule (100) nach einem der vorhergehenden Ansprüche, **dadurch gekennzeichnet, dass** die Wellenwicklungsspule mindestens eine, bevorzugt zwei, weiter bevorzugt mehrere Teilspulen (23, 24) aufweist, wobei besonders bevorzugt jede der Teilspulen (23, 24) einem Abschnitt (22a-22f) oder mehreren Abschnitten (22a-22f) mit konstanter Nutteilung entspricht.

10. Statorblechpaket mit einer Wellenwicklungsspule (100) nach einem der vorhergehenden Ansprüche.

## Claims

1. Wave winding coil (100) for an internally or externally slotted laminated stator core of an electrical machine, comprising a plurality of electrical conductors (11a-11l) of wavelike form, wherein each of the plurality of electrical conductors (11a-11l) has a plurality of wire segments (12) arranged running in parallel; wherein the wave winding coil can be arranged on the laminated stator core in such a way that several or all of the wire segments (12) arranged in parallel can be introduced into stator slots of the laminated stator core; wherein the wave winding coil, in the state when not arranged on the laminated stator core, takes the form of a planar coil; and wherein it is provided that, for insertion into an internally or externally slotted laminated stator core, the wave winding coil is curved to form a substantially cylindrical coil body,
**characterized in that**
in the state when not arranged on the laminated stator core, the wave winding coil has a variable slot pitch so that at least a first distance (20) and a second distance (21) of two respective wire segments (12) differ from one another in a first direction (13) which, in the state of the wave winding coil arranged on the laminated stator core, corresponds to a circumferential direction of the laminated stator core, said wire segments being arranged adjacently and to be inserted into adjacent stator slots,
wherein the first distance (20) and the second distance (21) are measured in the first direction (13),
wherein, depending on the arrangement and winding scheme of the wave winding coil, the adjacent wire segments (12) are wire segments (12) of the same electrical conductor (11a-11l) or are adjacent wire segments (12) of different electrical conductors (11a-11l),
wherein the wave winding coil has at least two segments (22a-22f) along the first direction; wherein each of the segments (22a-22f) has a plurality of parallel-running wire segments of the plurality of electrical conductors;
wherein each of the segments (22a-22f) has a constant slot pitch; wherein the slot pitches of at least two segments (22a-22f) differ; wherein each segment (22a-22f) of constant slot pitch in the state when arranged on the laminated stator core corresponds to one revolution of the wave winding coil around the inner circumference or around the outer circumference of the laminated stator core; and wherein the constant slot pitch in each segment (22a-22f) corresponds to that slot distance which is measured in depth in the stator slot in which the wire segments (12) arranged in parallel and corresponding to the respective revolution come to lie.

2. Wave winding coil (100) according to Claim 1, **characterized in that** the wave winding coil comprises at least six, preferably at least twelve, particularly preferably at least 20, electrical conductors (11a-11l) of wavelike form.

3. Wave winding coil (100) according to Claims 1 or 2, **characterized in that** the slot pitch decreases and/or increases in the first direction.

4. Wave winding coil (100) according to any one of the preceding claims, **characterized in that** the wave winding coil has a plurality of segments (22a-22f) along the first direction.

5. Wave winding coil (100) according to any one of the preceding claims, **characterized in that** the segments (22a-22f) are arranged uniformly along the first direction (13) with a constant slot pitch, wherein preferably several, possibly all, segments (22a-22f) with a constant slot pitch have a number of wire segments (12) which are arranged traveling in parallel, which number corresponds to the number of stator slots of the laminated stator core, wherein particularly preferably a segment (22a-22f) of constant slot pitch has a number of wire segments (12) which is greater than the number of stator slots.

6. Wave winding coil (100) according to any of the preceding claims, **characterized in that** the wave winding coil has at least two layers, wherein in a second direction (14) which, in the state of the wave winding coil when arranged on the laminated stator core, corresponds to a radial direction of the laminated stator core, at least two wire segments (12) are arranged one above the other, wherein the at least two wire segments (12) are particularly preferably wire segments (12) of different electrical conductors (11a-11l).

7. Wave winding coil (100) according to any one of the preceding claims, **characterized in that** the number of segments (22a-22f) with a constant slot pitch corresponds to the number or to half the number of wire segments (12) to be arranged in each stator slot.

8. Wave winding coil (100) according to any one of the preceding claims, **characterized in that** the at least one electrical conductor (11a-11l) is a copper wire and/or has a rectangular conductor cross-section.

9. Wave winding coil (100) according to any one of the preceding claims, **characterized in that** the wave winding coil has at least one, preferably two, more preferably a plurality of sub-coils (23, 24), wherein particularly preferably each of the sub-coils (23, 24) corresponds to one segment (22a-22f) or to a plurality of segments (22a-22f) with constant slot pitch.

10. Laminated stator core with a wave winding coil (100) according to any one of the preceding claims.

## Revendications

1. Bobine à enroulement ondulé (100) pour un noyau feuilleté de stator à encoche intérieure ou à encoche extérieure d'une machine électrique, comprenant plusieurs conducteurs électriques (11a-11l) réalisés sous une forme ondulée, chacun des plusieurs conducteurs électriques (11a, 11l) présentant une pluralité de segments de fil (12) disposés parallèlement les uns aux autres, la bobine à enroulement ondulé pouvant être disposée de telle manière sur le noyau feuilleté de stator que plusieurs ou tous les segments de fil (12) disposés parallèlement les uns aux autres peuvent être introduits dans des encoches de stator du noyau feuilleté de stator, la bobine à enroulement ondulé étant réalisée, dans l'état non disposé sur le noyau feuilleté de stator, sous la forme d'une bobine plane, et la bobine à enroulement ondulé étant prévue pour être courbée en un corps de bobine sensiblement cylindrique pour l'insertion dans un noyau feuilleté de stator à encoche intérieure ou à encoche extérieure,
**caractérisée en ce que**
la bobine à enroulement ondulé présente, dans l'état non disposé sur le noyau feuilleté de stator, un pas d'encochage variable, de telle sorte qu'au moins une première distance (20) et une seconde distance (21) entre respectivement deux segments de fil (12), disposés de manière adjacente dans une première direction (13), qui correspond à une direction circonférentielle du noyau feuilleté de stator une fois la bobine à enroulement ondulé disposée sur le noyau feuilleté de stator, et à introduire dans des encoches de stator adjacentes, diffèrent l'une de l'autre,
la première distance (20) et la seconde distance (21) étant mesurées dans la première direction (13),
les segments de fil (12) disposés de manière adjacente étant, selon la disposition et le schéma d'enroulement de la bobine à enroulement ondulé, des segments de fil (12) du même conducteur électrique (11a-11l) ou des segments de fil (12) adjacents de différents conducteurs électriques (11a-11l),
la bobine à enroulement ondulé présentant au moins deux segments (22a-22f) le long de la première direction, chacun des segments (22a-22f) présentant une pluralité de segments de fil disposés parallèlement les uns aux autres des plusieurs conducteurs électriques, chacun des segments (22a-22f) présentant un pas d'encochage constant, les pas d'encochage d'au moins deux segments (22a-22f) étant différents, chaque segment (22a-22f) à pas d'encochage constant correspondant, dans l'état disposé sur le noyau feuilleté de stator, à un tour de la bobine à enroulement ondulé autour de la circonférence intérieure ou autour de la circonférence extérieure du noyau feuilleté de stator, et le pas d'encochage constant dans chaque segment (22a-22f) correspondant à la distance entre les encoches qui est mesurée dans l'encoche de stator à la profondeur à laquelle les segments de fil (12) disposés parallèlement les uns aux autres et correspondant au tour respectif, viennent se loger.

2. Bobine à enroulement ondulé (100) selon la revendication 1, **caractérisée en ce que** la bobine à enroulement ondulé comprend au moins six, de préférence au moins douze, de manière particulièrement préférentielle au moins 20 conducteurs électriques (11a-11l) réalisés sous une forme ondulée.

3. Bobine à enroulement ondulé (100) selon la revendication 1 ou 2, **caractérisée en ce que** le pas d'encochage diminue et/ou augmente dans la première direction.

4. Bobine à enroulement ondulé (100) selon l'une quelconque des revendications précédentes, **caractérisée en ce que** la bobine à enroulement ondulé présente plusieurs segments (22a-22f) le long de la première direction.

5. Bobine à enroulement ondulé (100) selon l'une quelconque des revendications précédentes, **caractérisée en ce que** les segments (22a-22f) à pas d'encochage constant sont disposés de manière régulière le long de la première direction (13), plusieurs, le cas échéant tous les segments (22a-22f) à pas d'encochage constant présentant de préférence un nombre de segments de fil (12) disposés parallèlement les uns aux autres qui correspond au nombre des encoches de stator du noyau feuilleté de stator, un segment (22a-22f) à pas d'encochage constant présentant de manière particulièrement préférentielle un nombre de segments de fil (12) qui est supérieur au nombre des encoches de stator.

6. Bobine à enroulement ondulé (100) selon l'une quelconque des revendications précédentes, **caractérisée en ce que** la bobine à enroulement ondulé comporte au moins deux couches, au moins deux segments de fil (12) étant disposés l'un sur l'autre dans une seconde direction (14), qui, une fois la bobine à enroulement ondulé disposée sur le noyau feuilleté de stator, correspond à une direction radiale du noyau feuilleté de stator, les au moins deux segments de fil (12) étant de manière particulièrement préférentielle des segments de fil (12) de conducteurs électriques (11a-11l) différents.

7. Bobine à enroulement ondulé (100) selon l'une quelconque des revendications précédentes, **caractérisée en ce que** le nombre des segments (22a-22f) à pas d'encochage constant correspond au nombre ou à la moitié du nombre des segments de fil (12) à disposer dans chaque encoche de stator.

8. Bobine à enroulement ondulé (100) selon l'une quelconque des revendications précédentes, **caractérisée en ce que** l'au moins un conducteur électrique (11a-11l) est un fil de cuivre et/ou présente une section de conducteur rectangulaire.

9. Bobine à enroulement ondulé (100) selon l'une quelconque des revendications précédentes, **caractérisée en ce que** la bobine à enroulement ondulé présente au moins une, de préférence deux, de préférence encore plusieurs parties de bobine (23, 24), chacune des parties de bobine (23, 24) correspondant de manière particulièrement préférentielle à un segment (22a-22f) ou plusieurs segments (22a-22f) à pas d'encochage constant.

10. Noyau feuilleté de stator doté d'une bobine à enroulement ondulé (100) selon l'une quelconque des revendications précédentes.
